# EUROPEAN PATENT SPECIFICATION

(11) **EP 1 654 175 B1**
(45) Date of publication and mention of the grant of the patent: **28.05.2008**
(21) Application number: 04744032.6
(22) Date of filing: 26.07.2004
(51) Int. Cl.: B65G 45/22, B65G 23/06, B65G 17/08

(54) **WASTE GATHERLESS CONVEYING APPARATUS**
VORRICHTUNG ZUR BEFÖRDERUNG VON ABFALL UNTER VERHINDERUNG VON ANSAMMELN
APPAREIL TRANSPORTEUR SANS ACCUMULATION DE DECHETS

(30) Priority: 29.07.2003 IT BO20030453
(43) Date of publication of application: 10.05.2006
(73) Proprietor: Pulsar S.r.l., 40013 Castel Maggiore (Bologna) (IT)
(72) Inventor: FRANZAROLI, Massimo, I-40013 Castel Maggiore (IT)
(74) Representative: Fanzini, Valeriano
(86) International application number: PCT/IB2004/002373
(87) International publication number: WO 2005/009874

(56) References cited:
- EP-A- 0 095 933
- EP-A- 0 569 071
- EP-A- 1 232 965
- EP-A- 1 270 454
- US-A- 2 854 131
- US-A- 5 685 411
- US-B1- 6 227 354
- US-E- R E30 341

## Description

### Technical Field

The present invention relates to a device for conveying articles according to the preamble of claim 1, especially articles made of paper, such as rolls of toilet paper or of paper for general household use, in a production facility in which process residue is present, particularly in the form of fine-particle residue and especially residue of paper and the like.

More specifically, the production facility in which the conveying device according to the invention is used is a facility for making and packaging rolls of paper for personal or household use, such as toilet rolls, kitchen rolls and the like.

### Background Art

Conveying devices, as the one described in document EP-A-0569071, are known which comprise means for moving or transporting the articles. These moving or transporting means may consist of a conveyor chain comprising a plurality of links joined to each other and each comprising means for supporting the articles and means of connection to the other chain links.

Each chain link includes a lower portion which connects the link to the other links and which comprises a block that also serves as an element for engaging the chain drive means. The lower portion also comprises two transversally spaced lateral strips or wings.

The drive means, of known type, consist of a wheel with radial teeth all the way around it. The teeth come into contact with the chain link plate-like portion that supports the articles being transported.

In existing production facilities of the above mentioned type, the paper residue is dispersed in the environment and accumulates especially on the lower section of the conveyor chain link surface that supports the articles where the drive wheel tooth meshes with the corresponding link of the conveyor chain.

In particular, the residue tends to stick to the drive wheel teeth which exert pressure on it and cause it to be compacted on the underside of the supporting plate of the chain link.

The residue thus forms a thick layer on the chain links, giving rise to problems for conveyor chain drive and requiring, thorough cleaning, which means periodically shutting down the production facility for maintenance, with all the costs that such shutdowns involve.

### Disclosure of the invention

The invention is defined in the appended claim 1, to eliminate the problems of the prior art above.

This prevents the residue or other dirt from accumulating in undesired parts of the conveyor.

According to an especially advantageous embodiment, the removing means comprise means that allow the residue to drop by gravity.

According to another particularly advantageous embodiment not part of the present invention, the removing means comprise means for extracting the residue by suction.

According to yet another particularly advantageous embodiment not part of the present invention, the removing means comprise means for emitting a fluid under pressure.

According to another advantageous aspect, the invention provides a conveying device in which the drive means present a plurality of teeth extending in such a way that their end edges do not come into contact with the underside of the supporting plates of the chain.

In this way, it is possible to prevent compacting the residue on the underside of the plate that supports the articles.

This stops the residue from accumulating and eliminates the need for periodic maintenance which would mean shutting down the production facility to remove the residue that would otherwise accumulate in conveyors of this kind.

Other advantageous aspects of the invention are described in the other claims.

### Brief description of the drawings

The technical characteristics of the invention, are clearly described in the claims below and its advantages are apparent from the detailed description which follows, with reference to the accompanying drawings which illustrate preferred embodiments of the invention provided merely by way of example without restricting the scope of the inventive concept, and in which:
- Figure 1 is a schematic longitudinal section through line I-I of Figure 2 of an embodiment of the conveying device according to the present invention, and only partially shows the conveyor chain;
- Figure 2 is a schematic top view, with some parts cut away, of the embodiment of the invention, partially showing the conveyor chain;
- Figure 3 is a schematic cross section, through line III-III of Figure 1, of the embodiment of the invention;
- Figure 4 is a schematic bottom view of one of the links of the conveyor chain;
- Figure 5 is a schematic longitudinal section, similar to Figure 1, of a first particular embodiment of the conveying device according to the present invention;
- Figure 6 is a schematic top view, with some parts cut away and similar to Figure 2, of the first particular embodiment of the invention;
- Figure 7 is a schematic longitudinal section, similar to Figure 1, of an embodiment of a device not part of the present invention;
- Figure 8 is a schematic horizontal longitudinal section of an embodiment of a device not part of the invention, showing in particular the drive wheel, the supporting side plates and the blowing means;
- Figure 9 is a schematic perspective view, with some parts cut away, of an embodiment of a device not part of the present invention;
- Figure 10 is a schematic longitudinal section, similar to Figure 1, of an embodiment of a device not part of the present invention;
- Figure 11 is a schematic top plan view of an embodiment of a device not part of the invention, showing in particular the drive wheel, the supporting side plates and the suction means;
- Figure 12 is a schematic perspective view of a part of an embodiment of a device not part of the present invention;
- Figure 13 is a schematic longitudinal section, similar to Figure 1, of an embodiment of a conveying device not part of the present invention;
- Figure 14 is a schematic longitudinal section, similar to Figure 1, of an embodiment of a conveying device not part of the present invention;
- Figure 15 is a schematic perspective view, with some parts cut away, of the drive wheel of an embodiment of a device not part of the present invention.

### Description of the preferred embodiments of the invention

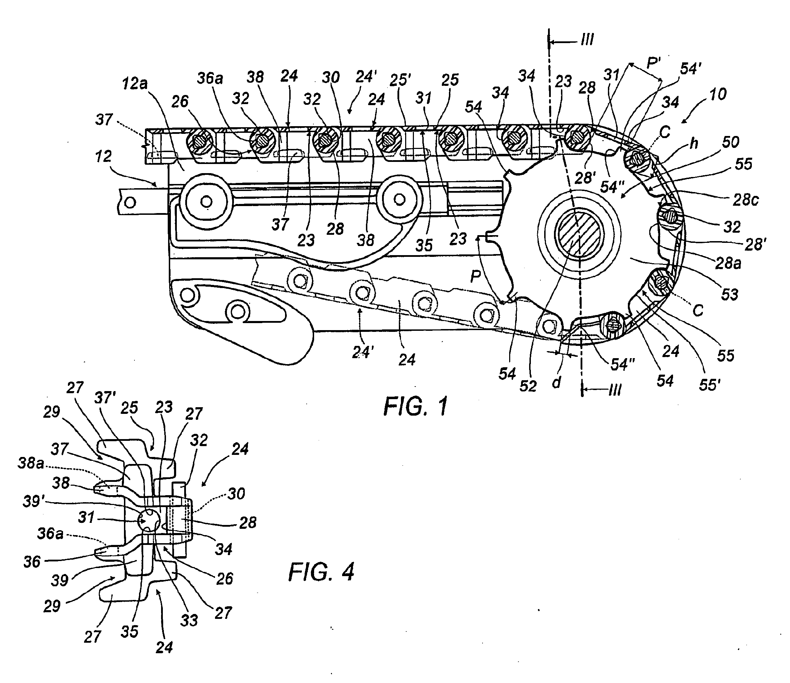

With reference to the accompanying drawings, an embodiment 10 of a device according to the present invention is illustrated in Figures 1 to 4.

The device is designed in particular for conveying articles, especially articles paper such as rolls of toilet paper or of paper for general household use. The device might equally be used for conveying articles of a different kind.

Further, the conveying device according to the invention is especially designed for use in a production facility in which process residue is present, particularly in the form of fine-particle residue and especially residue of paper and the like.

Preferably, the conveying device according to the invention is used in a facility for making and packaging rolls of paper for personal or household use, such as toilet rolls, kitchen rolls and the like, that is to say, in the "tissue" paper sector.

It should be stressed, however, that the device according to the invention might also be used in production facilities in sectors other than the "tissue" paper sector.

As illustrated in Figures 1 to 4, the embodiment 10 of the conveying device comprises means for supporting the articles to be transported. These means comprise a mounting frame 12 which comprises a first lateral side plate 12a and a second lateral side plate 12b which are in turn supported by a longitudinal profile 14 that forms a first and a second mounting rail 16, 18 for the belt 24' on which the articles are conveyed or transported.

As stated above, means are also provided for conveying or transporting the articles, these means consisting of a conveyor chain or belt 24' comprising a plurality of links 24 joined to each other and each comprising a lower portion 26 defining means for supporting the articles and means of connection to the other chain links, and an upper portion 25 on which the articles to be transported rest and are supported.

The lower portion comprises a front central block 28 forming an element for engaging chain drive means, as described in more detail below.

The lower block 28 also presents a transversal through cavity 30 for accommodating a transversal knuckle pin 32 joining it to the chain link before it.

The lower block 28 also presents a rear surface 34 that constitutes means for engaging a respective portion or tooth that engages with the drive means, as described in more detail below.

The lower portion further comprises two transversally spaced lateral strips 36, 38 extending backwards from the front block 28; these strips having respective transversal holes 36a and 38a to receive the knuckle pin supporting the back of the next link of the conveyor chain or chain conveyor.

The link 24 of the conveyor chain also comprises an upper portion 25 constituting means for supporting the articles and consisting of a supporting surface 25'.

More specifically, the upper portion consists of a shaped plate 25 having protrusions 27 and recesses 30 that fit the matching protrusions and recesses of the plates on the links before and after it in such manner as to form a substantially continuous supporting surface for the articles.

The upper portion also presents a lower surface 23 and two tabs 37, 39 extending sideways to engage and vertically retain respective protrusions 24a, 24b of the longitudinal profile.

Advantageously, the conveying device according to the invention comprises means for removing the residue of the products transported, and consisting, in particular, of means for removing the residue from a defined area of the conveyor, especially the area defined by the conveyor belt and/or by the drive wheel and/or by appropriate means for supporting the conveyor.

More specifically, the means for removing the residue consist of means that allows the residue to drop out by gravity.

The means that permit the residue to drop by gravity consist, more specifically, of holes 31 made in the upper supporting portion 25.

As illustrated, the hole is a through hole 31 which allows the residue to fall from the returning section of the conveyor when the endless chain or belt is in the upturned condition, as clearly shown in Figure 1.

The hole 31 is made in the central part of the upper plate 25, just downstream of the knuckle block 28. In this way, it is possible to completely clean the drive tooth engagement area.

In practice, the hole 31, as illustrated in the drawings, is circular in shape and relatively large in radius.

The hole 31 has a front edge 33 located in the vicinity of the rear edge 34 of the lower block 28 of the chain link 24, that is to say, in the area where the drive tooth 54 meshes with the respective chain link.

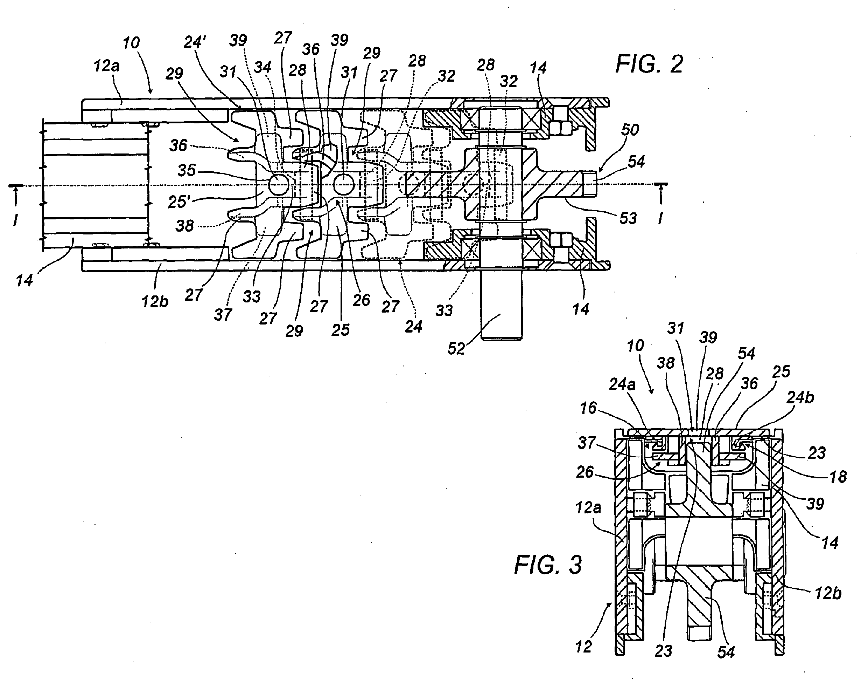

The hole 31 also has a rear edge 39' and two lateral edges 35 and 37' located at or in the vicinity of a corresponding inside face of the lower lateral strips 36, 38 of the chain link, as shown in Figure 2.

Means are provided for driving the means that convey or transport the articles, these drive means consisting of a toothed wheel 50 extending vertically in a central position under the forward moving section of the conveying means and rotationally driven by a shaft 52 that is rotatably mounted on the supporting means (as illustrated in Figures 1 and 2).

The toothed wheel 50 has a disc-shaped central body 53 and a plurality of teeth 54 extending laterally from it.

In this particular embodiment, the teeth 54 have length and thickness such that they engage only with the rear engagement surface of the respective chain link, that is to say, the rear surface of the block 28 between the shaped lateral strips.

More specifically, as illustrated, the length of the teeth 54 is such that their end edge does not come into contact with the underside 23 of the horizontal.plate of the chain link.

The wheel 50 is made preferably of metal. It may, however, be made of other suitable materials, such as, for example, plastic.

The wheel 50 makes it possible to prevent compacting the residue on the underside of the plate that supports the articles.

Indeed, since the teeth 54 of the wheel 50 do not touch the underside 23 of the links, no pressure is applied to the residue on the link, which means that it is prevented from caking on the link as it usually does on prior art conveying devices of this kind.

As may be inferred from the drawings, during use, the upper edge 54' of the tooth 54 remains well clear of the underside 23 of the respective conveyor link. More specifically, the clearance is less than a third of the height "h" between the lower edge 28a of the block 28, which is engaged by the circumferential surface 55' of the tooth space 55 between one tooth and the next, and the underside 23 of the article supporting plate of the link.

According to another aspect that may be inferred from the drawings, the upper edges 54' of the teeth 54 are located at substantially the same height as the virtual circle described by the centres "C" of the knuckle pins 32.

It may also be imagined that the upper edges 54' of the teeth 54 are located below the level of the virtual circle described by the centres "C" of the knuckle pins 32.

Hence, the length of the drive wheel teeth 54 is reduced but without thereby reducing the effectiveness of their driving action.

Further, as may be inferred from the drawings, the thickness "d" of the tooth 54 at the top end is much less than half the length of the spacing "p" of the teeth 54 (in practice, the thickness "d" is less than a third of the tooth spacing "p"), thus forming a rear tooth face 54" which, during use, is positioned at the hole 31, that is to say, perpendicularly aligned within the peripheral surface or edge that defines the hole. The rear tooth surface 54" remains on the same side of an imaginary perpendicular line through the centre of the circular hole 31 as the front section of the link.

As illustrated, the length or thickness "d" of the tooth 54 is much less than half and approximately equal to a quarter of the distance "p" which, during use, separates the front face 28' of the block 28 of one link and the rear surface 34 of the next link immediately downstream of it. Therefore; the tooth 54 occupies an extremely small amount of space between the blocks 28 that engage the conveyor links to each other.

Thus, the drive wheel has circumferentially "thin" teeth. Indeed, as shown in the drawings, the thickness "d" at the top of the tooth 54 is less than the tooth spacing "p" and, in practice, this circumferential thickness is much less than the tooth spacing.

This feature is especially effective in preventing the accumulation of residue.

It will be understood, however, that although this type of drive wheel is used preferably with the conveyor belt 24' according to the present invention, it might also be used with other conveyor belts without the holes for the passage of the residue.

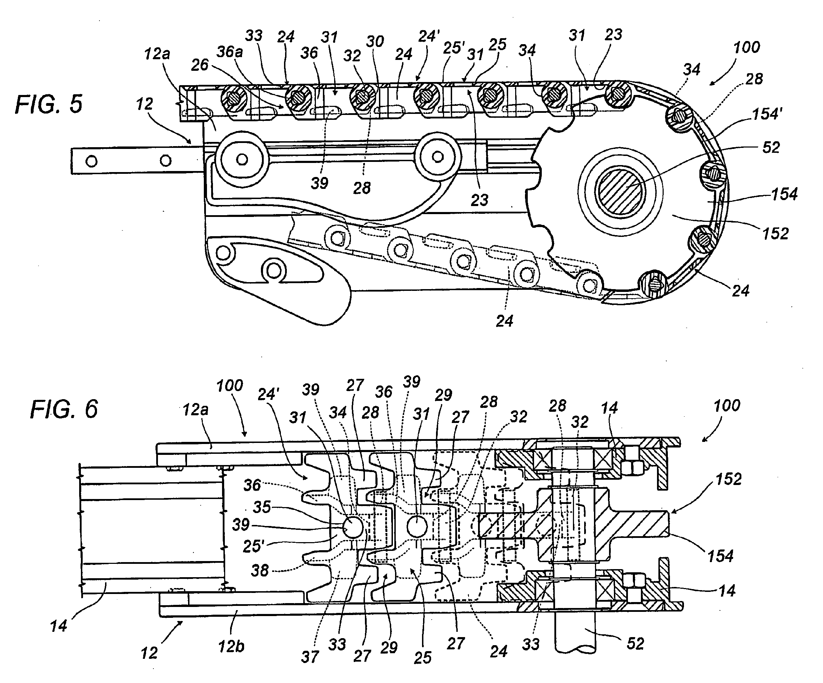

Figures 5 and 6 illustrate a first particular embodiment of the conveying device according to the present invention. In Figures 5 and 6, the components similar to those already described are labelled with the same reference characters as those of the first preferred embodiment and, for brevity and convenience, will not be described again.

As illustrated in Figures 5 and 6, the first particular embodiment 100 of the invention contemplates the use of a wheel 152 whose circumferential teeth 154 come into contact with the rear engagement face of the block 28 and come close to contact with the underside of the upper plate 25. It may also be imagined, however, that the tooth of the wheel have an outer circumferential surface 154' that comes into substantial contact with the inside surface 23 of the respective link.

In this case, too, the combined action of the holes prevents the residue from accumulating.

The drive wheel teeth 154 push the residue through the holes 31 causing it to fall out through the holes 31.

More specifically, as may be inferred from the drawings, the upper surface 154' of each tooth of the wheel 150 extends for the full length of the hole 31, well past the rear edge 39' of the hole itself.

The device therefore prevents the residue from accumulating in the working area where the tooth of the drive means acts.

Thus, in the returning section, when the conveyor belt or chain is turned upside down, the residue that would otherwise be trapped on its inside face where the conveyor meshes with the drive teeth, falls out freely through the holes.

The holes 31 made in the conveyor means thus overcome the problem caused by accumulated residue hindering smooth drive and eliminate the need to shut down the production facility for maintenance to remove the residue as was required in conveyor systems known up to now.

Furthermore, the use of a drive wheel whose teeth come into contact with the conveyor belt only to the extent strictly necessary for driving the conveyor constitutes an especially preferred way of preventing the residue from caking on the conveyor.

In addition, the residue can be advantageously removed even when the drive wheels used have teeth extending at an angle well into the area of engagement with the conveyor means and substantially in contact with the underside of the article supporting means.

In this case, the circumferential end surface 154' of the tooth 154 constitutes means for expelling the residue through the hole 31.

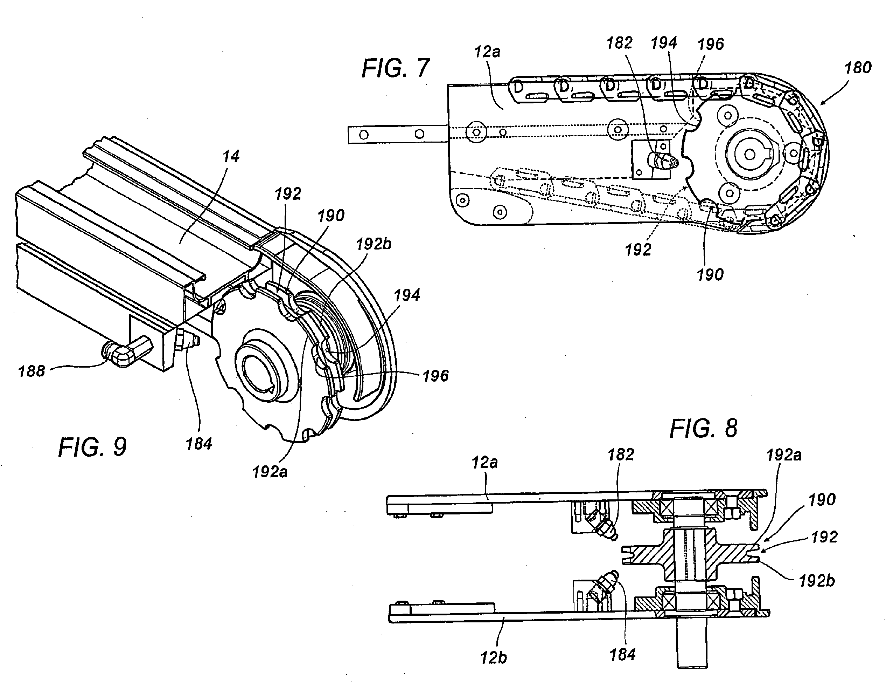

An embodiment 180 of a device not according to the present invention for conveying articles is illustrated in Figures 7 to 9.

In this embodiment 180 of a device, the means for removing the residue from the conveyor means consist of means for eliminating the residue from the conveyor means.

More specifically, the means for eliminating the residue consist of means for emitting a fluid under pressure towards and against a respective part of the conveyor means.

The fluid emitting means comprise a first nozzle 182 and a second nozzle 184, each of which emits a jet of fluid under pressure, consisting more specifically, of a jet of air under pressure, channelled to it through a lateral conduit or fitting 188.

As illustrated in the drawings, the first and second nozzles 182 and 184 are fitted to opposite sides of the device and are mounted on the inside faces of the two side plates 12a, 12b opposite each other in a position under the upper section of the conveyor means.

As illustrated, the first nozzle 182 and the second nozzle 184 preferably direct the respective fluid jet at the drive wheel 190 and, more specifically, at the area in the middle of the wheel.

Preferably, the jet of fluid is supplied continuously. The fluid jet might, however, also be supplied at regular intervals or only when required.

Further, the pressure of the fluid jet might be made to vary from a minimum value to a maximum value. The fluid is supplied at minimum pressure continuously and the pressure is increased to the maximum value at predetermined periodic intervals or on command, when required.

In other terms, the maximum pressure jet provides an extra jet of fluid under pressure which removes the more stubborn residue from the conveyor.

Advantageously, the drive wheel 190 has a central circumferential groove 192 that extends around the lower border of the recess made between the teeth of the drive wheel.

Thus, the body of wheel 190 is defined by a first and a second disc-shaped portion 192a, 192b positioned side by side and transversally spaced in such a way as to form a central groove 192 where the residue can accumulate without being pressed against the underside of the conveying means.

This also means that when the residue removing means are off, the residue accumulates inside the groove and does not interfere with or hinder the action of the drive wheel meshing with the conveyor chain.

As illustrated, the circumferential groove 192 has a bottom surface 196 that extends at substantially the same level as the bottom surface 194 of the recesses between the teeth of the wheel 190.

The means for emitting the jet of fluid under pressure might also be directed at any other suitable part of the conveying device.

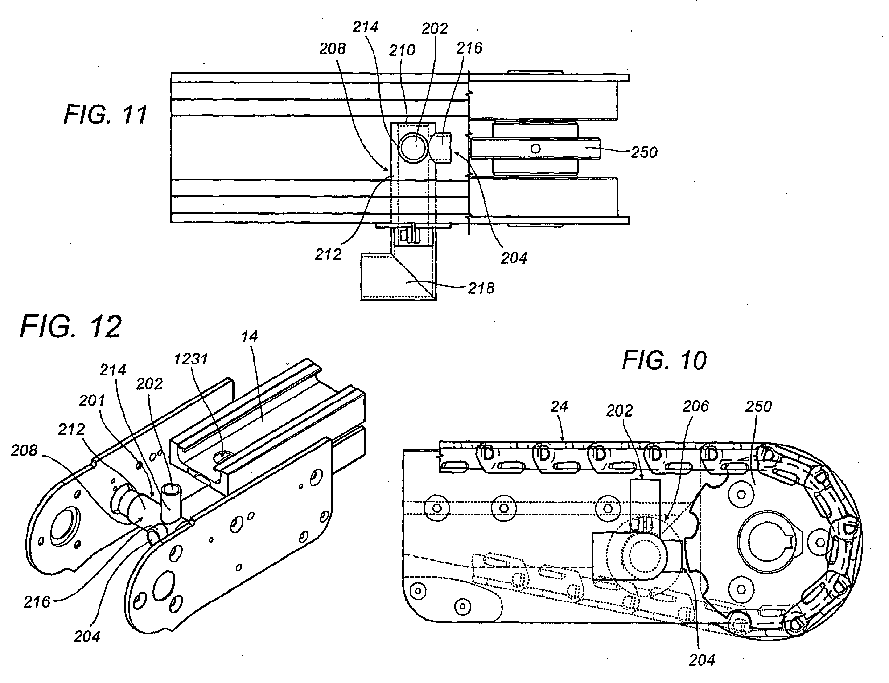

In an embodiment not part of the invention, illustrated in Figures 10 to 12, the means for removing the residue consist of means for extracting the residue by suction. In Figures 10 to 12, the components similar to those already described are labelled with the same reference characters as those of the other embodiments and, for brevity and convenience, will not be described again.

From these figures, it may be inferred that the suction means extract the residue from the conveyor, in particular from the top of the conveyor and preferably from the product supporting plate 25.

The suction means also extract the residue from the bottom of the conveyor, in particular from the drive wheel 250..

Accordingly, as clearly illustrated in Figure 10, the suction means are centrally positioned under the conveyor means 24.

The suction means are also positioned close to the drive wheel 250 and upstream of it.

As illustrated, the suction means comprise a first suction inlet 202 and a second suction inlet 204 made in a single body or block 201 and extending in a position in substantially the same plane as the holes in the wheel 250.

According to another aspect, it may be inferred from the drawings that the suction inlet 202 that extract residue from the plate 25 above it extends to a position close to the underside 23 of the conveyor means and is designed to extract the residue through a hole 31 in the conveyor belt.

According to yet another aspect, at least one hole 1231 is provided in a longitudinal mounting profile 14 close to the drive head. The hole 1231 allows the residue to fall through the profile.

The suction block 201 consists of a tubular element 208 extending transversally and having an end surface 210 and a cylindrical lateral surface 212 from which tubular elements 214, 216, with respective suction inlets 202, 204 at the ends of them, extend at right angles.

As illustrated in the drawings, the tubular elements are angularly spaced by an angle of or around 90°.

As illustrated, the tubular element 208 also has a fitting 218 with a pipe connected to suction means which carry the residue to a discharge outlet or into a suitable tank.

In a further embodiment not part of the present invention that is not illustrated, the drive wheel is equipped with means for emitting a fluid.

Indeed, nozzles or holes through which a fluid is emitted under pressure may be provided at a respective recess between adjacent teeth on the drive wheel. More specifically, the nozzles may be provided at the bottom of the recess and blow a jet of air in a radial direction.

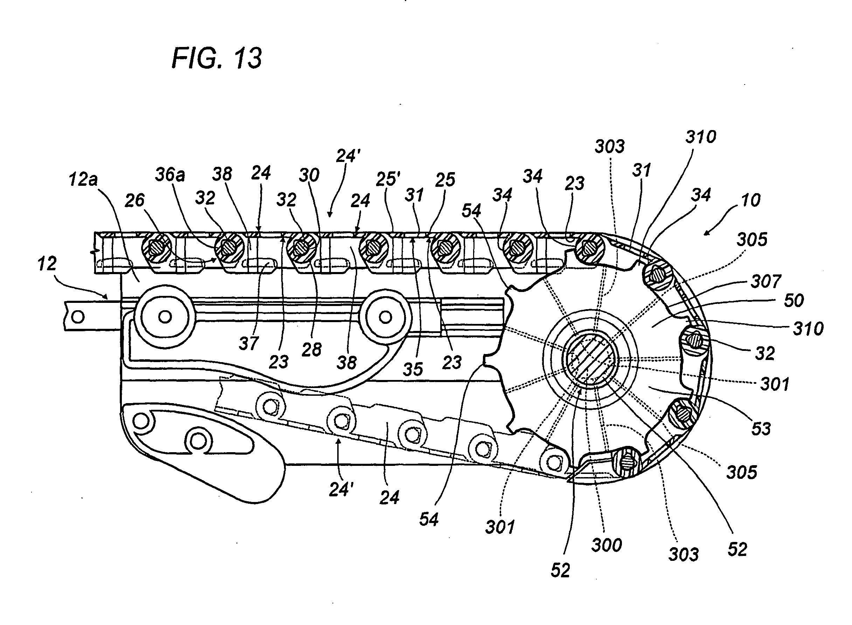

In an embodiment not part of the present invention, illustrated in Figure 13, having components that are the same as those of the other embodiments already described, labelled with the same reference characters, means for removing the residue are advantageously provided at the teeth of the drive wheel.

Advantageously, the means for removing the residue at the teeth of the drive wheel consist of blowing means in the space between successive teeth on the drive wheel.

For this purpose, there is provided a central manifold 300, extending transversally and connected with suitable means for supplying compressed air at a predetermined desired pressure and presenting a plurality of radial holes 301 distributed circumferentially and from which there extend respective radial blower conduits 303 each having at its opposite end an opening 305 giving onto the circumferential surface 307 of the curved space 309 between two successive teeth 310, 310 of the wheel.

This constitutes an even more effective way of preventing the accumulation of residue.

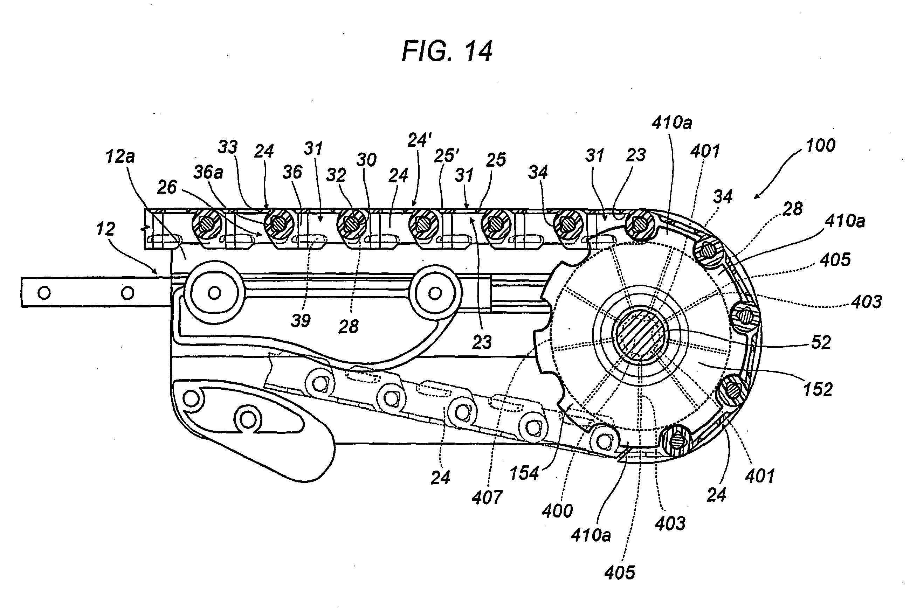

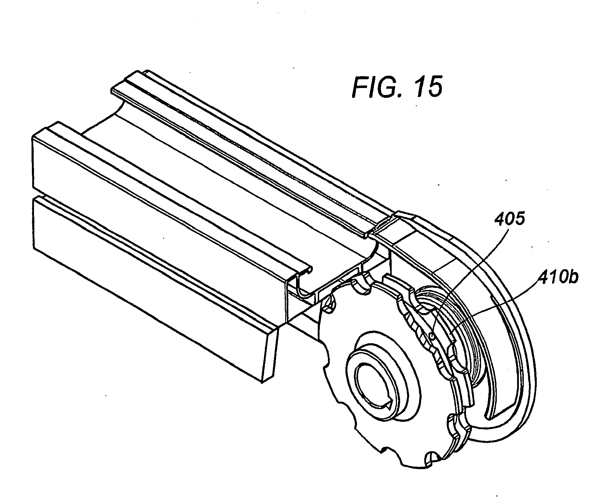

In an embodiment not part of the present invention, illustrated in Figures 14 and 15, having components that are the same as those of the other embodiments already described, labelled with the same reference characters, means for removing the residue are advantageously provided at the teeth of the drive wheel.

The means for removing the residue at the teeth of the drive wheel consist of blowing means in the grooves between pairs of teeth on the drive wheel.

For this purpose, there is provided a central manifold 400, extending transversally and presenting a plurality of radial holes 401 distributed circumferentially and from which there extend respective radial blower conduits 403 each having at its opposite end an opening 405 giving onto the circumferential surface 407 extending transversally between one tooth and the tooth next to it, respectively 410a, 410b, on the drive wheel.

This constitutes an even more effective way of preventing the accumulation of residue.

In yet another embodiment, not illustrated in the accompanying drawings but substantially the same as the embodiment not part of the present invention above except that the teeth on the drive wheel consist of single transversally extending blocks without the circumferential groove between them, unlike the embodiment not part of the present invention above, means for removing the residue are, in this case, too, advantageously provided at the teeth of the drive wheel.

Advantageously, the means for removing the residue at the teeth of the drive wheel consist of blowing means on the outer circumferential surface of each tooth on the drive wheel.

For this purpose, there is provided a central manifold 400, extending transversally and presenting a plurality of radial holes 401 distributed circumferentially and from which there extend respective radial blower conduits each having at its opposite end an opening that gives onto the outer circumferential surface of the drive wheel tooth.

This constitutes an even more effective way of preventing the accumulation of residue.

Means might also advantageously be provided for selecting or regulating air delivery into and out of the specific radial conduit so as to blow air only when the part of the wheel to be cleaned is in the required position.

According to another aspect, the conduits inside the wheels might be used to suck air in instead of blowing air out so as to extract the residue by suction and channel it to an appropriate area, preferably outside the building where the conveying device according to the invention is installed.

According to yet another embodiment not part of the invention, not illustrated in the accompanying drawings, extraction, by suction, of the residue from the upper surface of the conveyor means, especially through the holes in the conveyor chain links may be accomplished using a manifold channel running under the conveyor chain. This manifold channel is substantially sealed since it has an open end only at the top of it where it is sealed by the links of the conveyor belt.

It will be understood that the invention can be subject to modifications and variations without thereby departing from the scope of the appended claims. Moreover, all the details of the invention may be substituted by technically equivalent elements.

## Claims

1. A device (10) for conveying articles, especially articles made of paper, such as rolls of toilet paper or of paper for general household use, in a production facility in which process residue is present, particularly in the form of fine-particle residue and especially residue of paper and the like; the device (10) comprising means for conveying the articles and means for driving the conveyor means; the conveyor means comprise a conveyor chain having a plurality of links (24) joined to each other by means of knuckle pins (32); the link (24) of the conveyor chain comprises an upper portion defined by a plate (25) constituting means for supporting the articles and a lower portion (26) constituting means for supporting the plate (25) that support the articles; the lower portion (26) of the link comprises a block (28) constituting an element for the engaging of the chain drive means and is located at the front end of the link in a central position relative to the upper plate (25), the block (28) having a rear edge (34) and two transversally spaced wings (36, 38) protruding from the block (28); **characterised in that** the link has an hole (31) made in the upper support portion (25); and **in that** the hole (31) is made in the central part of the upper supporting plate (25) in the space provided in the vicinity of the rear edge (34) of the lower block (28) of the chain link and between the corresponding inside face of the lower lateral wings (36, 38) of the chain link.

2. The device (10) according to claim 1, **characterised in that** the hole (31) defines means that allow the residue to drop by gravity.

3. The device (10) according to claim 2, **characterised in that** the conveyor means comprise means (31) that allow the residue to drop by gravity when the conveyor means are in the upturned condition.

4. The device (10) according to any of the foregoing claims, **characterised in that** the hole (31) is circular in shape.

5. The device (10) according to any of the foregoing claims, **characterised in that** the drive means have a plurality of teeth (54) for engaging and driving the conveyor means.

6. The device (10) according to claim 5, **characterised in that** the means (50) for driving the conveyor means consist of a toothed wheel (50).

7. The device (10) according to claim 5 or 6, **characterised in that** the drive means (50) extend vertically.

8. The device (10) according to any of the foregoing claims from 5 to 7, **characterised in that** the drive means (50) extend under the conveyor.

9. The device (10) according to any of the foregoing claims from 5 to 8, **characterised in that** the drive means (50) are positioned in a central position relative to the conveying device.

10. The device (10) according to any of the foregoing claims from 5 to 9, **characterised in that** the teeth (54) of the drive means (50) are such that they engage only with the rear engagement surface of the respective chain link.

11. The device (10) according to any of the foregoing claims from 5 to 10, **characterised in that** the teeth (54) of the drive means (50) are such that they engage with the rear engagement surface of the block (28) between the lateral wings.

12. The device (10) according to claim 11, **characterised in that** the teeth (54) of the drive means (50) extend in such a way that their end edges do not come into contact with the underside (23) of the plate (25) of the conveyor chain link.

13. The device (10) according to any of the foregoing claims from 5 to 12, **characterised in that** the wheel (152) has circumferential teeth (154) that come into contact with or close to contact with the underside of the upper plate (25).

14. The device (10) according to any of the foregoing claims from 5 to 13, **characterised in that** the upper edge (54') of the tooth (54) remains clear of the underside (23) of the respective conveyor link, by a gap that is less than a third of the height (h) between the lower edge (28a) of the block (28), which is engaged by the circumferential surface (55') of the tooth space (55) between one tooth and the next, and the underside (23) of the article supporting plate of the link.

15. The device (10) according to any of the foregoing claims from 5 to 14, **characterised in that** the upper faces (54') of the teeth (54) are located at substantially the same height as the virtual circle described by the centres (C) of the knuckle pins (32).

16. The device (10) according to any of the foregoing claims from 5 to 15, **characterised in that** the upper faces (54') of the teeth (54) are located under the virtual circle described by the centres (C) of the knuckle pins (32).

17. The device (10) according to any of the foregoing claims from 5 to 16, **characterised in that** the thickness (d) of the tooth (54) at the top end of the latter is less than half of the spacing (p) between successive teeth (54).

18. The device (10) according to any of the foregoing claims from 5 to 17, **characterised in that** a rear face (54") of the tooth is positioned at the hole (31).

19. The device (10) according to any of the foregoing claims from 5 to 18, **characterised in that** a rear face (54") of the tooth is perpendicularly positioned within the extension of the peripheral surface or edge that defines the hole (31).

20. The device (10) according to any of the foregoing claims from 5 to 19, **characterised in that** the length or thickness (d) of the tooth (54) is much less than half and approximately equal to a quarter of the distance (p') which separates the front face (28') of the block (28) of one link and the rear surface (34) of the next link immediately downstream of it.

21. The device (10) according to any of the foregoing claims from 5 to 20, **characterised in that** the upper surface (154') of each tooth of the wheel (152) extends for the full length of the hole (31), well past the rear edge (39') of the hole itself.

22. Use of a device (10) according to any of the foregoing claims, for conveying articles, especially articles made of paper, in a production facility in which process residue is present, particularly in the form of fine-particle residue and especially residue of paper and the like.

## Patentansprüche

1. Vorrichtung (10) zum Befördern von Artikeln, insbesondere Artikeln aus Papier, wie Toilettenpapierrollen oder Küchenpapierrollen, in einem Produktionswerk, in dem Prozessrückstände vorhanden sind, insbesondere in Form von Feinpartikel-Rückständen und speziell Papierrückständen und dergleichen; wobei die Vorrichtung (10) Mittel zum Befördern der Artikel und Mittel für den Antrieb der Fördermittel beinhaltet; wobei die Fördermittel eine Förderkette beinhalten, die mehrere Glieder (24) aufweist, die durch Gelenkbolzen (32) miteinander verbunden sind; das Glied (24) der Förderkette bestehend aus einem oberen Abschnitt, der als eine Platte (25) ausgestaltet ist, die als Mittel zum Tragen der Artikel dient, und einem unteren Abschnitt (26), der die Mittel zum Tragen der Trägerplatte (25) für die Artikel bildet; wobei der untere Abschnitt (26) des Gliedes einen Block (28) beinhaltet, der ein Element für den Eingriff mit den Kettenantriebsmitteln bildet und am vorderen Ende des Gliedes mittig zu der oberen Platte (25) angeordnet ist, wobei der Block (28) eine hintere Kante (34) und zwei transversal beabstandete Flügel (36, 38) aufweist, die über den Block (28) herausragen; wobei die Vorrichtung **dadurch gekennzeichnet ist, dass** das Glied eine Öffnung (31) aufweist, die im oberen Trägerabschnitt (25) ausgefertigt ist; und dass die Öffnung (31) im mittleren Teil der oberen Trägerplatte (25) in dem Raum in der Nähe der hinteren Kante (34) des unteren Blocks (28) des Kettengliedes und zwischen der entsprechenden Innenfläche der unteren seitlichen Flügel (36, 38) des Ketten gliedes ausgefertigt ist.

2. Vorrichtung (10) nach Anspruch 1, **dadurch gekennzeichnet, dass** die Öffnung (31) die Mittel bildet, die das Herausfallen der Rückstände durch Wirkung der Schwerkraft erlauben.

3. Vorrichtung (10) nach Anspruch 2, **dadurch gekennzeichnet, dass** die Fördermittel Mittel (31) beinhalten, die das Herausfallen der Rückstände durch Wirkung der Schwerkraft erlauben, wenn sich die Fördermittel in dem nach oben gewandten Zustand befinden.

4. Vorrichtung (10) nach einem der vorherigen Ansprüche, **dadurch gekennzeichnet, dass** die Öffnung (31) eine kreisrunde Form aufweist.

5. Vorrichtung (10) nach einem der vorherigen Ansprüche, **dadurch gekennzeichnet, dass** die Antriebsmittel mehrere Zähne (54) aufweisen, die in die Fördermitteln eingreifen und diese antreiben.

6. Vorrichtung (10) nach Anspruch 5, **dadurch gekennzeichnet, dass** die Mittel (50) für den Antrieb der Fördermittel aus einem Zahnrad (50) bestehen.

7. Vorrichtung (10) nach Anspruch 5 oder 6, **dadurch gekennzeichnet, dass** sich die Antriebsmittel (50) senkrecht erstrecken.

8. Vorrichtung (10) nach einem der vorherigen Ansprüche von 5 bis 7, **dadurch gekennzeichnet, dass** sich die Antriebsmittel (50) unterhalb des Förderers erstrecken.

9. Vorrichtung (10) nach einem der vorherigen Ansprüche von 5 bis 8, **dadurch gekennzeichnet, dass** die Antriebsmittel (50) mittig zur Fördervorrichtung angeordnet sind.

10. Vorrichtung (10) nach einem der vorherigen Ansprüche von 5 bis 9, **dadurch gekennzeichnet, dass** die Zähne (54) der Antriebsmittel (50) so ausgeformt sind, dass sie nur in die hintere Eingriffsfläche des entsprechenden Kettengliedes eingreifen.

11. Vorrichtung (10) nach einem der vorherigen Ansprüche von 5 bis 10, **dadurch gekennzeichnet, dass** die Zähne (54) der Antriebsmittel (50) so ausgeformt sind, dass sie in die hintere Eingriffsfläche des Blocks (28) zwischen den seitlichen Flügeln eingreifen,

12. Vorrichtung (10) nach Anspruch 11, **dadurch gekennzeichnet, dass** die Zähne (54) der Antriebsmittel (50) sich so erstrecken, dass ihre Endkanten nicht die Unterseite (23) der Platte (25) des Förderkettengliedes berühren.

13. Vorrichtung (10) nach einem der vorherigen Ansprüche von 5 bis 12, **dadurch gekennzeichnet, dass** das Rad (152) eine Umfangsverzahnung (154) aufweist, die mit der Unterseite der oberen Platte (25) in Berührung tritt oder fast in Berührung tritt.

14. Vorrichtung (10) nach einem der vorherigen Ansprüche von 5 bis 13, **dadurch gekennzeichnet, dass** die obere Kante (54') des Zahns (54) einen Abstand zu der Unterseite (23) des entsprechenden Förderergliedes einhält, der weniger als ein Drittel der Höhe (h) beträgt, die zwischen der unteren Kante (28a) des Blocks (28), der mit der Umfangsfläche (55') der Zahnlücke (55) zwischen zwei aufeinanderfolgenden Zähnen im Eingriff ist, und der Unterseite (23) der Artikelträgerplatte des Gliedes besteht.

15. Vorrichtung (10) nach einem der vorherigen Ansprüche von 5 bis 14, **dadurch gekennzeichnet, dass** die oberen Flächen (54') der Zähne (54) im Wesentlichen auf der Höhe des gedachten Kreises angeordnet sind, der von den Mittelpunkten (C) der Gelenkbolzen (32) beschrieben wird.

16. Vorrichtung (10) nach einem der vorherigen Ansprüche von 5 bis 15, **dadurch gekennzeichnet, dass** die oberen Flächen (54') der Zähne (54) unterhalb des gedachten Kreises angeordnet sind, der von den Mittelpunkten (C) der Gelenkbolzen (32) beschrieben wird.

17. Vorrichtung (10) nach einem der vorherigen Ansprüche von 5 bis 16, **dadurch gekennzeichnet, dass** die Dicke (d) des Zahns (54) am oberen Zahnende weniger als die Hälfte des Abstandes (p) zwischen aufeinanderfolgenden Zähnen (54) beträgt.

18. Vorrichtung (10) nach einem der vorherigen Ansprüche von 5 bis 17, **dadurch gekennzeichnet, dass** eine rückseitige Fläche (54") des Zahns an der Öffnung (31) angeordnet ist.

19. Vorrichtung (10) nach einem der vorherigen Ansprüche von 5 bis 18, **dadurch gekennzeichnet, dass** eine rückseitige Fläche (54") des Zahns senkrecht innerhalb der Verlängerung der Umfangsoberfläche oder Kante, welche die Öffnung (31) beschreibt, angeordnet ist.

20. Vorrichtung (10) nach einem der vorherigen Ansprüche von 5 bis 19, **dadurch gekennzeichnet, dass** die Länge oder Dicke (d) des Zahns (54) weit weniger als die Hälfte und ungefähr gleich einem Viertel des Abstandes (p') ist, der die vordere Fläche (28') des Blocks (28) eines Gliedes und die hintere Oberfläche (34) des in Laufrichtung direkt darauf folgenden Gliedes voneinander trennt.

21. Vorrichtung (10) nach einem der vorherigen Ansprüche von 5 bis 20, **dadurch gekennzeichnet, dass** sich die obere Oberfläche (154') jedes Zahns des Rades (152) über die gesamte Länge der Öffnung (31) erstreckt, weit über die hintere Kante (39') der Öffnung selbst hinaus.

22. Gebrauch einer Vorrichtung (10) nach einem der vorherigen Ansprüche zum Befördern von Artikeln, insbesondere Artikeln aus Papier, in einem Produktionswerk, in dem Prozessrückstände vorhanden sind, insbesondere in Form von Feinpartikel-Rückständen und speziell Papierrückständen und dergleichen.

## Revendications

1. Un dispositif (10) pour transporter des articles, en particulier des articles réalisés en papier, tels que des rouleaux de papier hygiénique ou de papier à usage domestique général, dans une installation de production où des résidus de production sont présents, en particulier sous forme de résidus en particules fines et notamment de résidus de papier et similaires; le dispositif (10) comprenant des moyens pour le transport des articles et des moyens pour l'entraînement desdits moyens transporteurs; les moyens transporteurs comprennent une chaîne transporteuse ayant une pluralité de maillons (24) reliés les uns aux autres par l'intermédiaire de chevilles d'articulation (32); le maillon (24) de la chaîne transporteuse comprend une partie supérieure définie par une plaque (25) constituant des moyens pour le support des articles, et une partie inférieure (26) constituant des moyens pour le support de ladite plaque (25) de support des articles; la partie inférieure (26) du maillon comprend un bloc (28) qui constitue un élément pour la mise en prise des moyens d'entraînement de la chaîne et qui est situé au niveau de l'extrémité avant du maillon dans une position centrale par rapport à la plaque (25) supérieure, ledit bloc (28) présentant un bord arrière (34) et deux ailes (36, 38) transversalement espacées et saillant du bloc (28) lui-même; ledit dispositif étant **caractérisé en ce que** le maillon a un trou (31) réalisé dans la partie supérieure (25) de support; et **en ce que** le trou (31) est réalisé dans la partie centrale de la plaque supérieure (25) de support dans l'espace situé à proximité du bord arrière (34) du bloc inférieur (28) du maillon de chaîne et entre la face intérieure respective des ailes latérales inférieures (36, 38) de ce même maillon de chaîne.

2. Le dispositif (10) selon la revendication 1, **caractérisé en ce que** le trou (31) définit des moyens qui permettent aux résidus de tomber par gravité.

3. Le dispositif (10) selon la revendication 2, **caractérisé en ce que** les moyens transporteurs comprennent des moyens (31) qui permettent aux résidus de tomber par gravité quand les moyens transporteurs eux-mêmes sont dans la condition retournée.

4. Le dispositif (10) selon l'une quelconque des revendications précédentes, **caractérisé en ce que** le trou (31) a une forme circulaire.

5. Le dispositif (10) selon l'une quelconque des revendications précédentes, **caractérisé en ce que** les moyens d'entraînement ont une pluralité de dents (54) destinées à venir en prise avec les moyens transporteurs et à les entraîner.

6. Le dispositif (10) selon la revendication 5, **caractérisé en ce que** les moyens (50) prévus pour l'entraînement des moyens transporteurs consistent en une roue dentée (50).

7. Le dispositif (10) selon la revendication 5 ou 6, **caractérisé en ce que** les moyens d'entraînement (50) s'étendent à la verticale.

8. Le dispositif (10) selon l'une quelconque des revendications précédentes de 5 à 7, **caractérisé en ce que** les moyens d'entraînement (50) s'étendent au-dessous du transporteur.

9. Le dispositif (10) selon l'une quelconque des revendications précédentes de 5 à 8, **caractérisé en ce que** les moyens d'entraînement (50) sont placés dans une position centrale par rapport au dispositif transporteur.

10. Le dispositif (10) selon l'une quelconque des revendications précédentes de 5 à 9, **caractérisé en ce que** les dents (54) des moyens d'entraînement (50) sont telles qu'elles viennent en prise uniquement avec la surface de mise en prise arrière du maillon de chaîne respectif.

11. Le dispositif (10) selon l'une quelconque des revendications précédentes de 5 à 10, **caractérisé en ce que** les dents (54) des moyens d'entraînement (50) sont telles qu'elles viennent en prise avec la surface de mise en prise arrière du bloc (28), entre les ailes latérales.

12. Le dispositif (10) selon la revendication 11, **caractérisé en ce que** les dents (54) des moyens d'entraînement (50) s'étendent de manière à ce que leurs bords d'extrémité respectifs ne viennent pas en contact avec le dessous (23) de la plaque (25) du maillon de la chaîne transporteuse.

13. Le dispositif (10) selon l'une quelconque des revendications précédentes de 5 à 12, **caractérisé en ce que** la roue (152) a des dents circonférentielles (154) qui viennent en contact ou presque en contact avec le dessous de la plaque supérieure (25).

14. Le dispositif (10) selon l'une quelconque des revendications précédentes de 5 à 13, **caractérisé en ce que** le bord supérieur (54') de la dent (54) est distant du dessous (23) du maillon transporteur respectif d'un espace qui est inférieur à un tiers de la hauteur (h) entre le bord inférieur (28a) du bloc (28), qui est assujetti par la surface circonférentielle (55') de l'entredent (55) entre une dent et la suivante, et le dessous (23) de la plaque de support de l'article du maillon.

15. Le dispositif (10) selon l'une quelconque des revendications précédentes de 5 à 14, **caractérisé en ce que** les faces supérieures (54') des dents (54) sont situées essentiellement à la même hauteur que le cercle virtuel décrit par les centres (C) des chevilles d'articulation (32).

16. Le dispositif (10) selon l'une quelconque des revendications précédentes de 5 à 15, **caractérisé en ce que** les faces supérieures (54') des dents (54) sont situées au-dessous du cercle virtuel décrit par les centres (C) des chevilles d'articulation (32).

17. Le dispositif (10) selon l'une quelconque des revendications précédentes de 5 à 16, **caractérisé en ce que** l'épaisseur (d) de la dent (54), au niveau de l'extrémité supérieure de cette dernière, est inférieure à la moitié de l'espacement (p) entre des dents (54) successives.

18. Le dispositif (10) selon l'une quelconque des revendications précédentes de 5 à 17, **caractérisé en ce qu'**une face arrière (54") de la dent est positionnée au niveau du trou (31).

19. Le dispositif (10) selon l'une quelconque des revendications précédentes de 5 à 18, **caractérisé en ce qu'**une face arrière (54") de la dent est positionnée perpendiculairement dans les limites de l'extension de la surface périphérique ou bord qui définit le trou (31).

20. Le dispositif (10) selon l'une quelconque des revendications précédentes de 5 à 19, **caractérisé en ce que** la longueur ou épaisseur (d) de la dent (54) est bien inférieure à la moitié et approximativement égale à un quart de la distance (p') qui sépare la face avant (28') du bloc (28) d'un maillon et la surface arrière (34) du maillon qui suit juste en aval de celui-ci.

21. Le dispositif (10) selon l'une quelconque des revendications précédentes de 5 à 20, **caractérisé en ce que** la surface supérieure (154') de chaque dent de la roue (152) s'étend sur toute la longueur du trou (31), bien au-delà du bord arrière (39') du trou lui-même.

22. Utilisation d'un dispositif (10) selon l'une quelconque des revendications précédentes, pour transporter des articles, en particulier des articles réalisés en papier, dans une installation de production où des résidus de production sont présents, en particulier sous forme de résidus en particules fines et notamment de résidus de papier et similaires.
